Europäisches Patentamt

European Patent Office

Office européen des brevets

(11) Veröffentlichungsnummer : **0 053 121 B1**

(12) **EUROPÄISCHE PATENTSCHRIFT**

(45) Veröffentlichungstag der Patentschrift :
25.07.84

(21) Anmeldenummer : 81901215.4

(22) Anmeldetag : 06.05.81

(86) Internationale Anmeldenummer :
PCT/EP 81/00040

(87) Internationale Veröffentlichungsnummer :
WO/8103148 (12.11.81 Gazette 81/27)

(51) Int. Cl.³ : **B 32 B 27/12, A 41 D 31/00**

(54) **SCHUTZANZUG FÜR DEN WASSERSPORT.**

(30) Priorität : 08.05.80 DE 3017822

(43) Veröffentlichungstag der Anmeldung :
09.06.82 Patentblatt 82/23

(45) Bekanntmachung des Hinweises auf die Patenterteilung : 25.07.84 Patentblatt 84/30

(84) Benannte Vertragsstaaten :
AT CH FR GB LI NL

(56) Entgegenhaltungen :
DE-A- 1 635 680
DE-A- 2 737 756
GB-A- 1 205 062
GB-A- 1 452 795
US-A- 3 481 821

(73) Patentinhaber : Aquata GESELLSCHAFT FÜR WAS-
SERSPORT UND MEERESTECHNIK MBH & CO
Helmholtzstr. 2-9
D-1000 Berlin 10 (DE)

(72) Erfinder : DRESSLER, Wolfgang
Almazeile 10
D-1000 Berlin 27 (DE)

(74) Vertreter : Göbel, Matthias, Dipl.-Ing. et al
Pruppacher Hauptstrasse 5-7
D-8501 Pyrbaum-Pruppach (DE)

## Beschreibung

Die Erfindung betrifft einen Schutzanzug für den Wassersport mit einer den Anzugträger locker umgebenden unelastischen Wärmedämmschicht, die auf der Außenseite mit einer wasserundurchlässigen Schicht kaschiert ist.

Bei bekannten Anzügen dieser Art kann beim Einfallen des Anzugträgers in das Wasser dieses in den Raum zwischen Anzug und Körper eintreten und bei Verlassen des Wassers ablaufen, wodurch eine starke Kühlwirkung auf den Träger ausgeübt wird.

Der Erfindung liegt die Aufgabe zugrunde, Maßnahmen zu schaffen, den genannten Kühleffekt vermeiden zu helfen bzw. zu reduzieren.

Diese Aufgabe wird erfindungsgemäß dadurch gelöst, daß der unelastischen Wärmedämmschicht eine elastische, dem Anzugträger eng anliegende, wasserundurchlässige zweite Wärmedämmschicht zugeordnet ist, die mit der unelastischen Wärmedämmschicht längs Linien und/oder in Punkten, verbunden ist. Die beiden Wärmedämmschichten können z. B. miteinander vernäht, verschweißt oder verklebt werden. Auf diese Weise ist erreicht, daß das gegebenenfalls über die Hals- und Armöffnungen zwischen Anzug und Körper eindringende Wasser durch die enge Anlage des Schutzanzuges hinsichtlich der Menge gering bleibt und unter Vermeidung des Kühleffekts nicht bzw. kaum abfließt, während das zwischen den beiden Wärmedämmschichten eingedrungene Wasser den Anzug ohne Kühlwirkung verlassen kann.

Zwar sind bereits Schutzanzüge für den Wassersport (DE-U 17 04 171, DE-U 78 15 065) bekannt, die wasserundurchlässig sind und dem Träger elastisch, eng und wärmedämmend anliegen. Diesen Anzügen fehlt jedoch auf der Aussenseite die weitere Wärmedämmschicht, die den Träger umgibt. Bei diesen Anzügen tritt ein erheblicher Kühleffekt bei Windeinwirkung aufgrund von Verdunstungskälte auf. Dieser Effekt zeigt sich bei den erfindungsgemäßen Anzügen nicht, da die den Körper locker umgebende Wärmedämmschicht diese Einwirkungen verhindert.

In Weiterbildung der Erfindung ist die unelastische Wärmedämmschicht aus Watte, porösem und/oder zelligem Material gebildet und zweckmäßig auf der Außenseite textil- und/oder kunststoffbeschichtet, wobei die äußere Textil- und/oder Kunststoffschicht elastisch oder unelastisch ausgebildet ist.

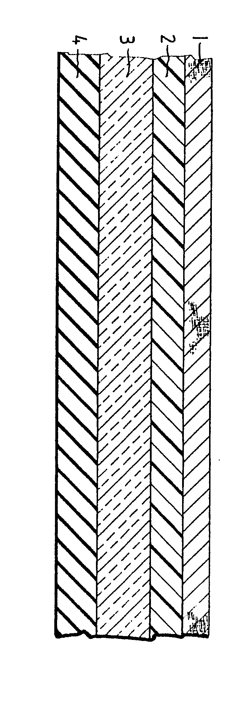

Die Zeichnung zeigt einen Schnitt durch ein erfindungsgemäßes Material zur Herstellung von Schutzanzügen für den Wassersport.

In der Zeichnung ist mit 1 ein Textilgewebe mit oder ohne Kunststoffbeschichtung, mit 2 eine wasserundurchlässige Schicht, mit 3 eine unelastische Wärmedämmschicht und mit 4 eine elastische dem Anzugträger eng anliegende, wasserundurchlässige zweite Wärmedämmschicht bezeichnet.

## Ansprüche

1. Schutzanzug für den Wassersport mit einer den Anzugträger locker umgebenden unelastischen Wärmedämmschicht, die auf der Außenseite mit einer wasserundurchlässigen Schicht kaschiert ist, dadurch gekennzeichnet, daß der unelastischen Wärmedämmschicht (3) eine elastische, dem Anzugträger eng anliegende, wasserundurchlässige zweite Wärmedämmschicht (4) zugeordnet ist, die mit der unelastischen Wärmedämmschicht (3) längs Linien und/oder in Punkten verbunden ist.

2. Schutzanzug nach Anspruch 1, dadurch gekennzeichnet, daß die unelastische Wärmedämmschicht (3) aus Watte, porösem und/oder zelligem Material besteht.

3. Schutzanzug nach Anspruch 1 und 2, dadurch gekennzeichnet, daß die unelastische Wärmedämmschicht (3) außen textil und/oder kunststoffbeschichtet ist und daß die äußere Textil- und/oder Kunststoffschicht elastisch oder unelastisch ausgebildet ist.

## Claims

1. Protective suit for water sports with a non-elastic thermally insulated layer which loosely envelops the wearer and which has a waterproof laminated coating on the outside, characterized in that the non-elastic thermally insulated layer (3) makes direct contact with an elastic waterproof second thermally insulated layer (4) which fits the wearer closely and which is joined to the non-elastic thermally insulated layer (3) either linearly and/or at points.

2. Protective suit according to claim 1, characterized in that the non-elastic thermally insulated layer (3) consists of wadding, porous and/or cellular material.

3. Protective suit according to claim 1 and 2, characterized in that the non-elastic thermally insulated layer (3) is coated on the outside by means of fabric and/or plastic and that the outer fabric and/or plastic layer is either elastic or non-elastic.

## Revendications

1. Vêtement de protection pour le sport nautique, comportant une couche calorifuge, non élastique, entourant le support vestimentaire, sans serrer, doublée, sur sa face externe, d'une couche imperméable à l'eau, caractérisé par le fait qu'à la couche calorifuge non élastique (3) est adjointe une deuxième couche calorifuge non élastique (4), imperméable à l'eau, tenant étroitement contre le support vestimentaire et liée à la couche calorifuge non élastique (3) suivant des lignes longitudinales et/ou des points.

2. Vêtement de protection suivant la revendication 1, caractérisé par le fait que la couche calorifuge non élastique (3) est constituée par de la ouate, du matériau poreux et/ou alvéolé.

3. Vêtement de protection suivant les revendications 1 et 2, caractérisé par le fait que la couche calorifuge non élastique (3) est doublée à l'extérieur d'une enveloppe textile ou en matière plastique, élastique ou non élastique.